# EUROPEAN PATENT APPLICATION

(11) **EP 4 199 472 A1**
(43) Date of publication of application: **21.06.2023**
(21) Application number: 20949039.0
(22) Date of filing: 12.08.2020
(51) Int. Cl.: H04L 65/40, G08G 5/06

(54) **UAV FLIGHT CONTROL METHOD AND APPARATUS, MANAGEMENT AND CONTROL STRATEGY PROCESSING METHOD AND APPARATUS FOR UAV, AND DEVICE AND MEDIUM**

(71) Applicant: Beijing Xiaomi Mobile Software Co., Ltd., Beijing 100085 (CN)
(72) Inventor: HONG, Wei, Beijing 100085 (CN)
(74) Representative: dompatent von Kreisler Selting Werner - Partnerschaft von Patent- und Rechtsanwälten mbB
(86) International application number: PCT/CN2020/108738
(87) International publication number: WO 2022/032540

(57) **Abstract**

Provided are a UAV flight control method and apparatus, a management and control strategy processing method and apparatus for a UAV, and an electronic device and a storage medium. The UAV flight control method can be applied to a session management function (SMF). The method includes: in response to detecting a control device switching requirement of an unmanned aerial vehicle (UAV), switching a control device for the UAV from a first device to a second device according to a management and control strategy.

## Description

### TECHNICAL FIELD

The disclosure relates to the field of wireless communication technology but is not limited to the field of wireless communication technology, in particular to an Unmanned Aerial Vehicle (UAV) flight control method, a UAV flight control apparatus, a UAV management and control strategy processing method, a UAV management and control strategy processing apparatus, an electronic device and a storage medium.

### BACKGROUND

In order to control the flight of the UAV, a UAV Controller (UAVC) is generally configured to control the flight of the UAV.

To facilitate a remote control transmission between the UAV and the UAVC, a communication connection is generally established, which allows the communication between the UAV and the UAV UAVC.

### SUMMARY

The disclosure provides a UAV flight control method, a UAV flight control apparatus, a UAV management and control strategy processing method, a UAV management and control strategy processing apparatus, an electronic device and a storage medium

According to a first aspect of the disclosure, a UAV flight control method, applied in a Session Management Function (SMF), is provided. The method includes:
in response to detecting a requirement for switching a control device for the UAV, switching the control device for the UAV from a first device to a second device based on a management and control strategy.

According to a second aspect of the disclosure, a UAV flight control method, applied in an Unmanned Aerial System (UAS) Traffic Management (UTM) or UAS Service Supplier (USS), is provided. The method includes:
in response to detecting a requirement for switching a control device for the UAV, switching the control device for the UAV from a first device to a second device based on a management and control strategy, and requesting a SMF to switch the control device for the UAV from the first device to the second device based on the management and control strategy.

According to a third aspect of the disclosure, a UAV management and control strategy processing method, applied in a Unified Data Repository (UDR), is provided. The method includes:
receiving a query request from a Network Exposure Function (NEF), in which the query request is transmitted based on an acquisition request from a SMF; and
sending a request response corresponding to the query request to the NEF, in which an acquisition response is used for being transmitted to the SMF by the NEF based on the request response corresponding to the query request, each of the request response and the acquisition response carries the management and control strategy, and the management and control strategy is used for performing switching of a control device for the UAV in response to detecting a requirement for switching the control device for the UAV.

According to a fourth aspect of the disclosure, a UAV flight control apparatus, applied in a SMF, is provided. The apparatus includes:
a first switching module, configured to, in response to detecting a requirement for switching a control device for the UAV, switch the control device for the UAV from a first device to a second device based on a management and control strategy.

According to a fifth aspect of the disclosure, a UAV flight control apparatus, applied in a UTM/USS, is provided. The apparatus includes:
a second switching module, configured to, in response to detecting a requirement for switching a control device for the UAV, switch the control device for the UAV from a first device to a second device based on a management and control strategy, and request a SMF to switch the control device for the UAV from the first device to the second device based on the management and control strategy.

According to a sixth aspect of the disclosure, a UAV management and control strategy processing apparatus, applied in a UDR, is provided. The apparatus includes:
a receiving module, configured to receive a query request from a NEF, in which the query request is transmitted based on an acquisition request from a SMF; and
a sending module, configured to send a request response corresponding to the query request to the NEF, in which an acquisition response is used for being transmitted to the SMF by the NEF based on the request response corresponding to the query request, each of the request response and the acquisition response carries the management and control strategy, and the management and control strategy is used for performing switching of a control device for the UAV in response to detecting a requirement for switching the control device for the UAV.

According to a seventh aspect of the disclosure, a communication device including a processor, a transceiver, a memory and programs stored on the memory and executable by the processor is provided. When the programs are executed by the processor, the method of the first aspect of the disclosure, the method of the second aspect of the disclosure or the method of the third aspect of the disclosure is implemented.

According to an eighth aspect of the disclosure, a computer storage medium storing executable programs is provided. When the executable programs are executed by a processor, the method of the first aspect of the disclosure, the method of the second aspect of the disclosure or the method of the third aspect of the disclosure is implemented.

When the requirement for switching the control device for the UAV is detected, it means that the current control device for the UAV needs to be switched, i.e., the current control device for the UAV is no longer applicable to control the UAV, and then the control device for the UAV is switched from the first device to the second device based on the management and control strategy, which can ensure the effective control of the UAV by the switched device compared to switching to a random control device. Alternatively, the switching of the control device for the UAV is not carried out, and thus the current control device cannot continue to effectively control the UAV, which leads to various UAV flight accidents. Therefore, the above method improves the UAV flight safety, and reduces the flight crash rate.

It should be understood that the above general description and the following detailed description are only exemplary and explanatory, and cannot limit the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram of a wireless communication system according to an exemplary embodiment.
FIG. 2 is a schematic diagram of a UAV control system according to an exemplary embodiment.
FIG. 3 is a schematic diagram of a Command and Control (C2) communication link according to an exemplary embodiment.
FIG. 4 is a flowchart of a UAV flight control method according to an exemplary embodiment.
FIG. 5 is a flowchart of a UAV flight control method according to an exemplary embodiment.
FIG. 6 is a flowchart of a UAV flight control method according to an exemplary embodiment.
FIG. 7 is a flowchart of a UAV management and control strategy processing method according to an exemplary embodiment.
FIG. 8 is a flowchart of a UAV management and control strategy processing method according to an exemplary embodiment.
FIG. 9 is a flowchart of a UAV management and control strategy processing method according to an exemplary embodiment.
FIG. 10 is a flowchart of a UAV management and control strategy processing method according to an exemplary embodiment.
FIG. 11 is a flowchart of a UAV flight control method and a UAV management and control strategy processing method according to an exemplary embodiment.
FIG. 12 is a schematic diagram of a UAV flight control apparatus according to an exemplary embodiment.
FIG. 13 is a schematic diagram of a UAV flight control apparatus according to an exemplary embodiment.
FIG. 14 is a schematic diagram of a UAV management and control strategy processing apparatus according to an exemplary embodiment.
FIG. 15 is a schematic diagram of a User Equipment (UE) according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

The terms used in the disclosure are only for the purpose of describing specific embodiments, and are not intended to limit the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in this disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

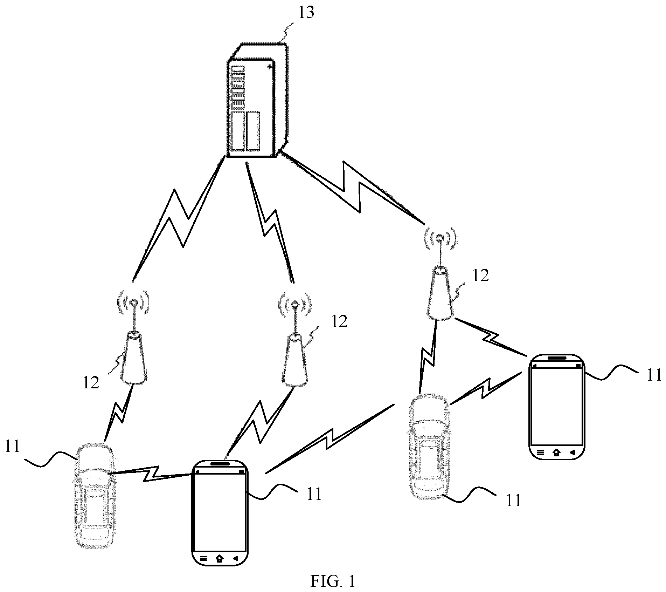

FIG. 1 is a schematic diagram of a wireless communication system according to an exemplary embodiment. As shown in FIG. 1, the wireless communication system is a communication system based on cellular mobile communication technology, and the wireless communication system may include: a plurality of UEs 11 and base stations 12.

The UE 11 may be a device that provides voice and/or data connectivity to a user. The UE 11 may communicate with one or more core networks via a Radio Access Network (RAN). The UE 11 may be an Internet of Things (IoT) UE, such as a sensor device, a mobile phone (or "cellular" phone) and a computer with the IoT UE. The UE 11 may be a fixed, portable, pocket, hand-held, built-in computer or a vehicle-mounted device, such as, a Station (STA), a subscriber unit, a subscriber station, a mobile station, a mobile, a remote station, an access point, a remote terminal, an access terminal, a user terminal, a user agent, a user device, or a UE. Alternatively, the UE 11 may also be a UAV device. Alternatively, the UE 11 may also be a vehicle-mounted device, such as, an Engine Control Unit (ECU) with a wireless communication function, and a wireless communication device connected to the ECU. Alternatively, the UE 11 may also be a roadside device, such as, a street light, a signal light, or other roadside devices with a wireless communication function.

The base station 12 may be a network-side device in a wireless communication system. The wireless communication system may be the 4th generation mobile communication (4G) system, also known as a Long Term Evolution (LTE) system. Alternatively, the wireless communication system may also be the 5th generation mobile communication (5G) system, also known as a New Radio (NR) system or 5G NR system. Alternatively, the wireless communication system may also be a next-generation system of the 5G system. The access network in the 5G system may be called New Generation-Radio Access Network (NG-RAN), or Machine Type Communication (MTC) system.

The base station 12 may be an evolved base station (eNB) in the 4G system. Alternatively, the base station 12 may also be a base station (gNB) that adopts a centralized distributed architecture in the 5G system. When the base station 12 adopts a centralized distributed architecture, it generally includes a Central Unit (CU) and at least two Distributed Units (DUs). The CU is provided with protocol stacks of a Packet Data Convergence Protocol (PDCP) layer, a Radio Link Control (RLC) layer, and a Media Access Control (MAC) layer. A physical (PHY) layer protocol stack is set in the DU, and the specific implementation manner of the base station 12 is not limited in this embodiment of the disclosure.

A wireless connection can be established between the base station 12 and the UE 11 through a radio interface. In different embodiments, the radio interface is a radio interface based on the 4G standard. Alternatively, the radio interface is a radio interface based on the 5G standard. For example, the radio air interface is a NR. Alternatively, the radio interface may also be a radio interface based on a next generation of the 5G standard.

In some embodiments, an End to End (E2E) connection may also be established between the UEs 11, for example, scenes of vehicle to vehicle (V2V) communication, Vehicle to Infrastructure (V2I) communication and Vehicle to Pedestrian (V2P) communication in Vehicle to everything (V2X) communication.

In some embodiments, the above wireless communication system may further include a network management device 13.

A plurality of the base stations 12 are connected to the network management device 13 respectively. The network management device 13 may be a core network device in the wireless communication system. For example, the network management device 13 may be a Mobility Management Entity (MME) in an Evolved Packet Core (EPC). Alternatively, the network management device may also be other core network devices, such as a Serving GateWay (SGW), a Public Data Network GateWay (PGW), a Policy and Charging Rules Function (PCRF) or a Home Subscriber Server (HSS). The implementation form of the network management device 13 is not limited in this embodiment of the disclosure.

FIG. 1 is a cellular mobile communication network.

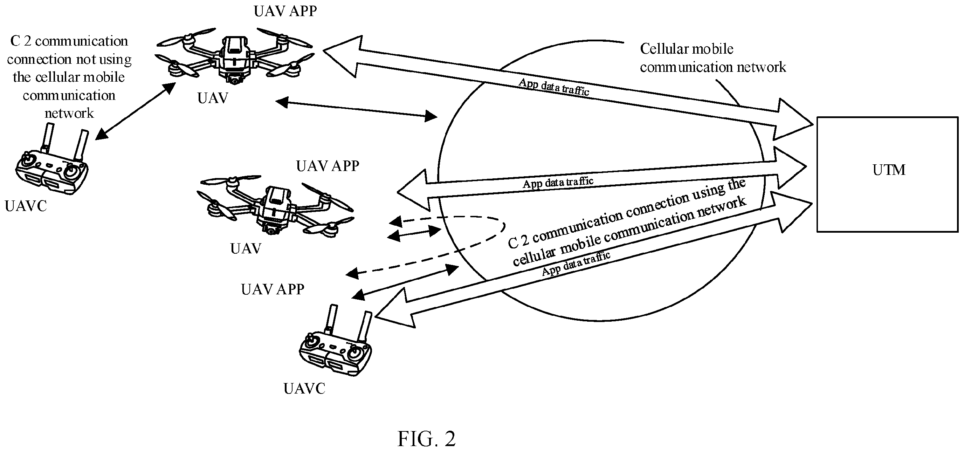

FIG. 2 is a control system for the UAV, UAVC and UTM. A communication connection between the UTM and the UAV is established via the cellular mobile communication network.

A direct C2 communication connection between the UAVC and the UAV is established without the cellular mobile communication network.

A C2 communication connection between the UAVC and the UAV is established via the cellular mobile communication network.

The UAV may have a UAV application to transmit an application data traffic over the C2 communication connection. The application data traffic includes, but is not limited to, flight data of the UAV and/or a control signaling transmitted by the UTM or UAVC.

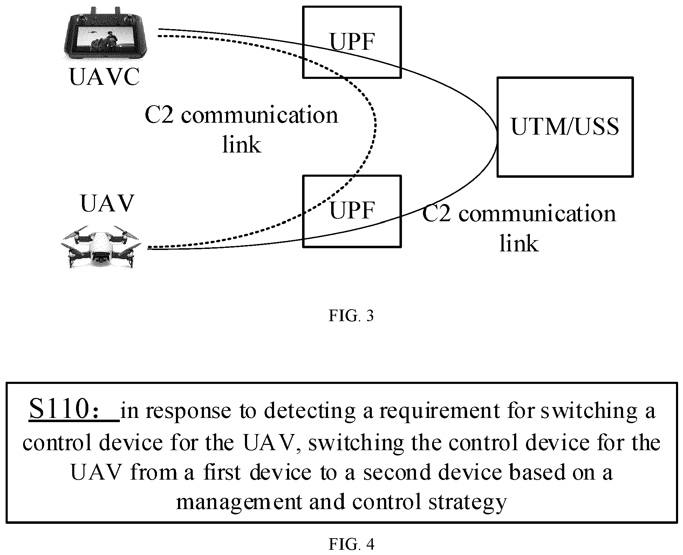

FIG. 3 illustrates two types of the C2 communication link that can be established via the cellular mobile communication network. The first type is a C2 communication connection between the UAVC and the UAV that uses a User Plane Function (UPF) and a UTM/USS of the cellular mobile communication network. The second type is a C2 communication connection between the UAVC and the UAV that uses the UPF only and does not use the UTM/USS.

FIG. 4 is a flowchart of a UAV flight control method according to an exemplary embodiment. The method is applied in a SMF, and the method includes the following steps.

At step S 110, in response to detecting a requirement for switching a control device for the UAV, the control device for the UAV is switched from a first device to a second device based on a management and control strategy.

When the requirement for switching the control device for the UAV is detected, it means that the current control device for the UAV needs to be switched, i.e., the current control device for the UAV is no longer applicable to control the UAV, and then the control device for the UAV is switched from the first device to the second device based on the management and control strategy, which can ensure the effective control of the UAV by the switched device compared to switching to a random control device. Alternatively, the switching of the control device for the UAV is not carried out, and thus the current control device cannot continue to effectively control the UAV, which leads to various UAV flight accidents. Therefore, the above method improves the UAV flight safety, and reduces the flight crash rate.

In the embodiment of the disclosure, the UAVC may be the UAVC in the C2 communication connection established by the cellular mobile communication network or a UAVC in a C2 communication connection established not through the cellular mobile communication network.

Detecting the requirement for switching the control device for the UAV includes:
detecting a misbehavior of the UAV; or
detecting the first device satisfying a control device switching condition when the UAV performs a legal behavior.

The misbehavior of the UAV may include: a flight behavior of the UAV that may cause a switching requirement (for example, the UAV flies into a no-fly zone that is prohibited by a country or a region, or the UAV flies into a controlled area without permission), and a deviation from a preset route of the UAV.

In other cases, the current flight behavior of the UAV is legal, but the control device needs to be switched to another due to a problem with the current control device itself or a communication problem. For example, the above problem may be that the current control device for the UAV is shut down, the power of the current control device is low, or the quality of the communication connection between the UAV and the current control device for the UAV is poor, which is not good for the flight control of the UAV, which satisfies the control device switching condition of the UAV when the UAV performs a legal behavior.

The control device switching condition for the first device includes but not limited to at least one of the following conditions:
a breakdown of the first device;
an overload of the first device; or
a quality of the communication connection between the first device and the UAV reducing to a preset value.

In conclusion, the control device switching condition includes: a switching requirement from the UAV itself and a switching requirement of the control device caused by circumstances other than by the UAV.

If the UAV, the first device and the second device in this embodiment each establishes a Protocol Data Unit (PDU) session for the C2 communication connection, and the C2 communication connection between the UAV and the UAVC is established through the cellular mobile communication network, the release and establishment of the communication connection can be controlled via the SMF.

In an embodiment, the communication connection between the UAV and the UAVC may be a C2 communication connection that does not use the UTM/USS shown in FIG. 3. The SMF transmits the management and control strategy to the UPF, so that the UPF can establishes a routing of C2 data packets between the UAV and the UAVC. The communication connection between the UAV and the UAVC is realized based on the routing established by the UPF.

The above switching requirement can trigger the SMF to switch the control device based on the management and control strategy for the UAV.

In the embodiment of the disclosure, the management and control strategy may include:
rules for determining one or more second devices after the switching or device information of the second device.

The device information includes, but is not limited to, address information of the second device, such as, IP address information and/or MAC address information.

For example, the UTM may maintain device status information of a plurality of candidate devices. The device status information reflects an operation status and/or device status of the plurality of candidate devices. Upon detecting a requirement for switching the control device for the UAV, a device suitable for controlling the UAV may be selected based on the device status information as the second device to control the flight of the UAV, and the device status information is included in the management and control strategy and transmitted to the SMF.

In some embodiments, in response to detecting the requirement for switching the control device for the UAV, switching the control device for the UAV from the first device to the second device based on the management and control strategy, includes:
releasing a communication connection between the UAV and the first device; and
establishing a communication connection between the UAV and the second device.

If the first device controls the flight of the UAV, a communication connection between the first device and the UAV is established, which may be a C2 communication connection.

In the embodiments of the disclosure, switching the control device for the UAV from the first device to the second device includes the following steps.

At step S111, a communication connection between the UAV and the first device is released.

At step S112, a communication connection between the UAV and the second device is established. In this way, after the communication connection between the UAV and the first device is released, communication resources used to establish the communication connection between the UAV and the first device can be released, so that the communication connection between the UAV and the second device can be established for the second device to control the transmission of control commands of the flight of the UAV and/or flight data of the UAV.

For example, the SMF configures the UPF to route C2 data packets between the UAV and the second device, and releases a PDU session of the first device. The above C2 data packets include any data transmitted between the UAV and the control device, such as, control commands sent by the control device and/or flight data reported by the UAV.

In an embodiment, the SMF may send a first indication to the UPF of the UAV to indicate to establish the communication connection between the UAV and the second device. If the second device is another UAVC, the SMF sends a second indication to the UPF of the second device to indicate to establish the communication connection between the second device and the UAV. Meanwhile, the SMF sends a third indication to the UPF of the first device to indicate to release the communication connection between the first device and the UAV.

The above first indication at least carries the address information of the second device, so that the UPF can route the communication data between the UAV and the second device.

In some embodiments, establishing the communication connection between the UAV and the second device, includes:
transmitting address information of the second device to a UPF, in which the communication connection between the UAV and the second device is established by the UPF based on the address information.

Establishing the communication connection includes: transmitting the address information to the UPF that routes data transmission between the UAV and the controller (i.e., the control device). Therefore, after the updated address information is received, the UPF can carry out the communication between the second device and the UAV based on the address information retransmitted by the SMF, and the communication data includes but not limited to: a control signaling from the second device to the UAV and/or the flight data of the UAV.

In some embodiments, there is no certain sequential relation between releasing the communication connection between the first device and the UAV, and establishing the communication connection between the second device and the UAV. For example, the communication connection between the first device and the UAV is released first and then the communication connection between the UAV and the second device is established, or the communication connection between the UAV and the second device is established first and then the communication connection between the UAV and the first device is released, or the communication connection between the first device and the UAV is released while the communication connection between the UAV and the second device is established.

In some embodiments, the method further includes:
in response to detecting a requirement for switching a control device for the UAV and after determining to switch the control device for the UAV from the first device to the second device, continuing to monitor whether the requirement for switching the control device is satisfied continuously; and if the requirement being canceled within a buffer duration during the continuous monitoring, not performing the switching from the first device to the second device. In this way, the unnecessary switching can be avoided. The buffer duration may be a preset length of time starting from a time at which the requirement for switching the control device for the UAV is detected, for example, 2s or 5s.

For example, if it is detected that the UAV approaches an edge of the no-fly zone but exits from the no-fly zone within 5s, the flight behavior is considered to be legal, and at this time, it is considered that the first device still can effectively control the UAV and there is no need to switch the control device for the UAV, and thus the unnecessary switching can be avoided and the chance of the UAV in the absence of the control device during the switching process may be reduced.

In some embodiments, the second device includes at least one of:
a UAVC; or
a UTM.

In some embodiments, the UTM can be a control device on an upper layer of the UAVC. For example, the UTM may select a UAVC for the UAV. When there is no suitable UAVC, the UTM may control the UAV directly.

Therefore, the second device here may be a new UAVC or the UTM itself.

The first device may be any device other than the second device, e.g., a UAVC different from the first device.

In some embodiments, the management and control strategy includes at least one of:
a management and control strategy for a single UAV;
a management and control strategy for a group of UAVs, in which the group of UAVs includes one or more UAVs; or
a management and control strategy for any UAV.

The management and control strategy may be any of the above strategy.

In an embodiment, the three types of strategies have different priorities. When a UAV that requires a switching of a control device is configured with the management and control strategy for the UAV, the control device is switched based on the management and control strategy for the UAV.

If the UAV is not configured with the management and control strategy for the UAV, it is determined whether the UAV belongs to a group of UAVs and whether the group is configured with the management and control strategy for the group of UAVs, and if so, the control device is switched based on the management and control strategy for the group of UAVs in which the UAV is located.

If the UAV is not configured with the management and control strategy for the UAV and there is no configured management and control strategy for the group of UAVs in which the UAV is located, the control device is switched based on the general management and control strategy for any UAV.

In some embodiments, the above types of strategies itself are not distinguished based on the priorities. When there is only one management and control strategy, the control device is switched based on the management and control strategy. If there is more than one management and control strategies, the control device is switched based on an effective management and control strategy.

For example, all the UAVs whose communication connection (e.g. but not limited to C2) belongs to the same Digital Network Name (DNN) can be collected into the same group of UAVs. Alternatively, the UAVs that are used for the same purpose are collected into the same group of UAVs. For example, the UAVs that are used for forest irrigation or chemical spraying are collected into the same group of UAVs.

For example, all the UAVs whose communication connection is established through the same network slice are collected into one group of UAVs.

In conclusion, there are various ways of establishing a group of UAVs in the embodiments of the disclosure, the specific implementations are not limited to any of the above.

In an embodiment, the method may include at least one of:
pre-configuring the management and control strategy;
obtaining the management and control strategy from a UDR; or
obtaining the management and control strategy from the UTM of the UAV.

In some embodiments, the management and control strategy can be configured and stored according to a frequency of a change of the management and control strategy.

For example, the management and control strategy with a first frequency of change is configured directly in the SMF, which generally is a static management and control strategy. For example, a general management and control strategy for any UAV may be a management and control strategy with a low frequency of change.

For example, the management and control strategy with a second frequency of change is stored in the UDR. The second frequency of change may or may not be greater than the first frequency of change.

For example, the management and control strategy with a third frequency of change is stored in the UTM. The third frequency of change may or may not be greater than the second frequency of change.

In conclusion, there are various sources for the management and control strategy, which are not limited to any of the above.

In some embodiments, obtaining the management and control strategy from the UDR, includes:
transmitting a request for the management and control strategy to a NEF; and
receiving a response from the NEF, in which the response includes the management and control strategy from the UDR.

The NEF can be an intermediate network element for a session between the UDR and the SMF. By introducing the NEF, the session security between the network elements of the core network can be ensured.

In some embodiments, obtaining the management and control strategy from the UTM of the UAV, includes:
obtaining the management and control strategy from the UTM during an authentication and authorization process of establishing the communication connection between the UAV and the first device;
   and/or
obtaining the management and control strategy from the UTM in response to detecting the requirement for switching the control device from the UAV.

For example, the SMF sends a request message to the UDR, and upon receipt of the request message, the UDR returns the management and control strategy. In conclusion, there are various ways for the SMF to obtain the management and control strategy, which are not limited to any one of the above.

In an embodiment, the SMF receives the management and control strategy pushed by the UDR. For example, when the management and control strategy for the UAV stored in the UDR changes, the UDR will actively send the updated management and control strategy to the NEF, and then the NEF further notifies the SMF, so that the SMF can receive the updated management and control strategy as soon as possible.

When the SMF establishes the communication connection between the UAV and the first device, a security control of the UAV and/or the first device is required to ensure the communication security, and the security control is mainly achieved through the authentication and authorization process. The management and control strategy can be transmitted by one or more messages in the authentication and/or authorization process, which means that the management and control strategy can be transmitted by using the existing process, which has the characteristic of being highly compatible with the existing technologies.

The SMF can also send a request for the management and control strategy to the UTM when it detects the requirement for switching the control device for the UAV.

In some embodiments, the misbehavior of the UAV includes at least one of: the UAV flying into a no-fly zone, or the UAV deviating from a preset route.

For example, the current location of the UAV can be estimated based on the flight data of the UAV or the current geographic location information of the UAS can be directly obtained from the UAV itself, so that it can be determined whether the UAV flies into the no-fly zone or deviates from the preset route based on the current geographic location information.

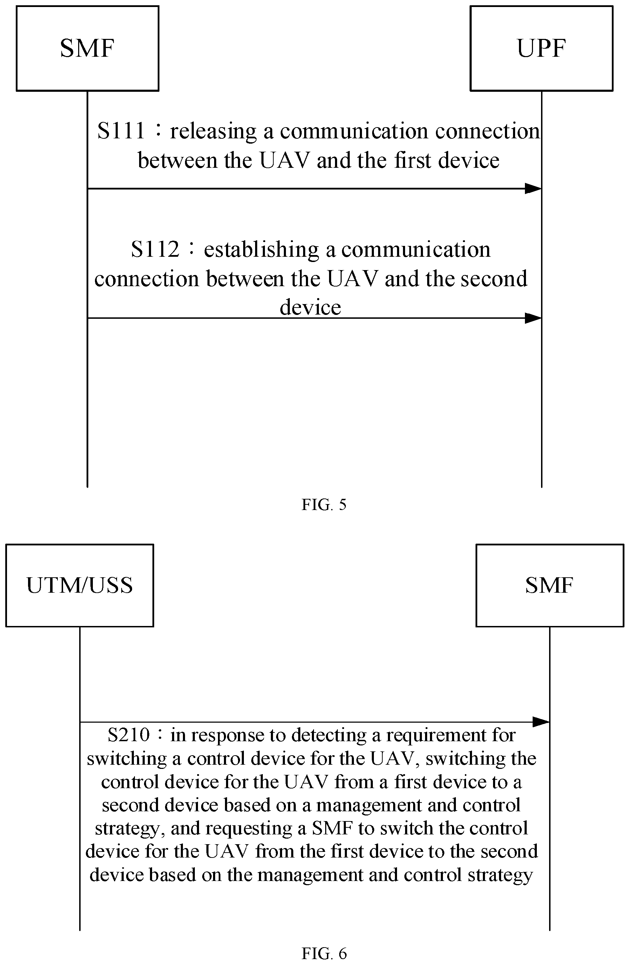

FIG. 6 is a flowchart of a UAV flight control method according to an exemplary embodiment. The method is applied in a UTM or USS, and the method includes the following steps.

At step S210, in response to detecting a requirement for switching a control device for the UAV, the control device for the UAV is switched from a first device to a second device based on a management and control strategy, and a SMF is requested to switch the control device for the UAV from the first device to the second device based on the management and control strategy.

This method can also be applied to the UTM or USS.

The UTM and USS can detect the misbehavior of the UAV or anomalies in their own devices, and thus they can also monitor whether there is a requirement for switching a control device. If the UTM and USS detects the requirement, the control device for the UAV is switched from the first device to the second device based on the management and control strategy.

There are various ways to specifically detect whether or not there is a requirement for switching a control device, which are not limited to any of the aforementioned embodiments.

In an embodiment, detecting the requirement for switching the control device for the UAV includes at least one of: detecting a misbehavior of the UAV;or
detecting the first device satisfying a control device switching condition when the UAV performs a legal behavior.

The misbehavior of the UAV includes but is not limited to: flying into a no-fly zone and/or deviating from a flight route.

In some embodiments, requesting the SMF to switch the control device for the UAV from the first device to the second device, includes:
requesting to release a communication connection between the UAV and the first device; and
requesting to establish a communication connection between the UAV and the second device.

Since the SMF controls the establishment of the communication connection between the UAV and the control device, in this embodiment, if the USS or UTM requests to switch the control device for the UAV, the USS or UTM will request the SMF to release the communication connection between the UAV and the current control device and establish the communication connection between the UAV and the new control device.

For example, the address information of the second device is sent to the SMF based on the request message, and upon receiving the request message, the initial connection is released and the communication connection between the UAV and the second device is established based on the new address information of the second device.

In an embodiment, establishing the communication connection between the UAV and the second device, includes:
transmitting address information of the second device to the SMF, in which the address information is used for being transmitted, by the SMF to a UPF, and the address information is used for establishing, by the UPF a session routing for a communication between the UAV and the second device.

After the address information of the second device is received, the SMF transmits the address information of the second device to the UPF, and the UPF can route any information transmitted between the UAV and its control device.

In an embodiment, the second device includes: a UAVC and/or a UTM.

In some embodiments, the management and control strategy includes:
a management and control strategy for a single UAV;
a management and control strategy for a group of UAVs, in which the group of UAVs includes one or more UAVs; and
a management and control strategy for any UAV.

In an embodiment, the method further includes: transmitting the management and control strategy to the SMF.

In some cases, the SMF can detect the requirement to switch the control device for the UAV by itself, and in order to reduce the delay, the management and control strategy can be sent directly to the SMF, so that the SMF can control the switching of the control device for the UAV.

In an embodiment, transmitting the management and control strategy to the SMF, includes at least one of:
transmitting the management and control strategy to the SMF during an authentication and authorization process of establishing the communication connection between the UAV and the first device; or
transmitting the management and control strategy to the SMF in response to detecting the requirement for switching the control device for the UAV.

The timing of transmitting the management and control strategy to the SMF is not limited to any of the above and may be of multiple. For example, the management and control strategy can be transmitted during the authentication and authorization process of establishing the communication connection between the first device and the UAV, or when the requirement for switching the control device is detected.

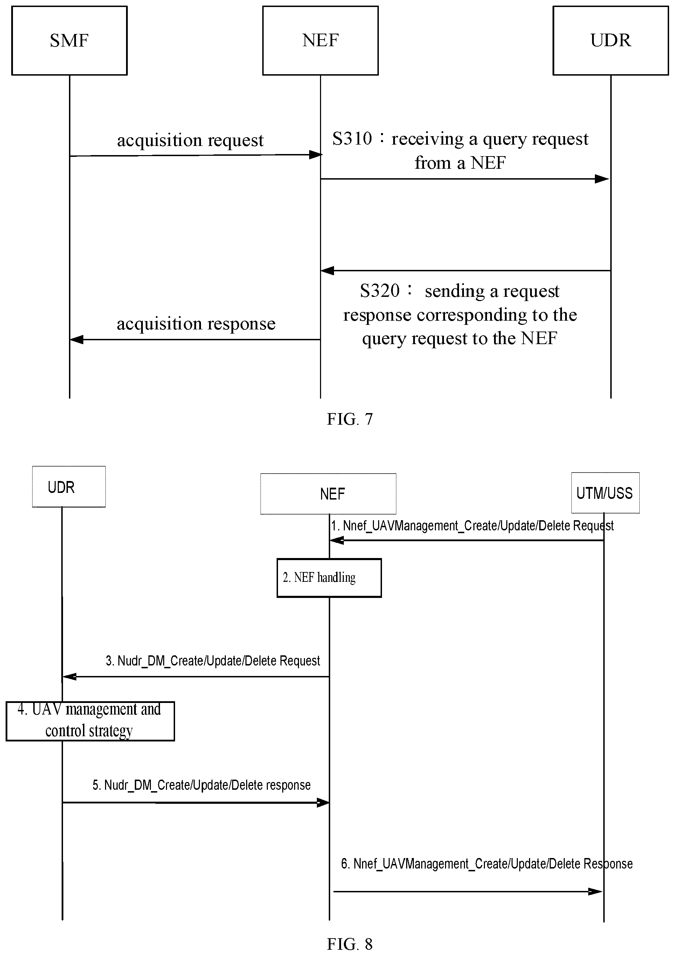

FIG. 7 is a flowchart of a UAV management and control strategy processing method according to an exemplary embodiment. The method is applied in a UDR, and the method includes the following steps.

At step S310, a query request is received from a NEF, in which the query request is transmitted based on an acquisition request from a SMF.

At step S320, a request response corresponding to the query request is sent to the NEF, in which an acquisition response is used for being transmitted to the SMF by the NEF based on the request response corresponding to the query request, each of the request response and the acquisition response carries the management and control strategy, and the management and control strategy is used for performing switching of a control device for the UAV in response to detecting a requirement for switching the control device for the UAV.

The communication connection between the SMF and the UDR requires an intermediate processing by the NEF to ensure the communication security.

Therefore, the SMF firstly sends the acquisition request to the NEF, and after the acquisition request is received, the NEF determines the current security, and then routes a corresponding query request to the UDR. After the UDR receives the query request, the request response is sent to the NEF, and the NEF sends the management and control strategy to the SMF.

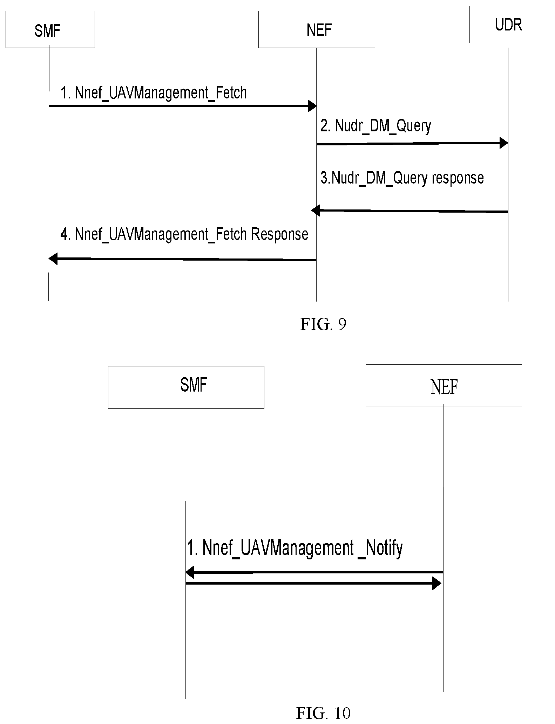

FIG. 9 is a flowchart of a UAV management and control strategy processing method according to an exemplary embodiment. The method includes the following steps.

The SMF sends Nnef_UAV Management-Fetch to the NEF, and this Nnef_UAV Management-Fetch is the above-mentioned acquisition request.

After receiving the Nnef_UAV Management-Fetch from the SMF, the NEF sends a Nudr_DM-Query to the UDR, and the Nudr_DM-Query is the above-mentioned query request.

After the Nudr_DM-Query is received, the UDR sends a Nudr_DM-response to the NEF, the Nudr_DM-Query response carries the management and control strategy provided by the UDR, and the Nudr_DM-Query response is one type of the request response corresponding to the aforementioned query request.

After receiving the Nudr_DM-Query response, the NEF sends the Nnef_UAV Management-Fetch Response to the SMF, the Nnef_UAV Management-Fetch Response is one type of the aforementioned acquisition response.

In an embodiment, the UAV management and control strategy processing method of the embodiment includes:
receiving a second request from the NEF based on a first request from a UTM/USS of the UAV;
processing the management and control strategy based on the second request; transmitting a request response corresponding to the second request to the NEF, in which a request response corresponding to the first request is used for being transmitted to the UTM/USS by the NEF based on the request response corresponding to the second request, and each of the request response corresponding to the first request and the request response corresponding to the second request carries a processing result of the management and control strategy.

The UTM/USS needs to communicate with the UDR via the NEF, so the UTM/USS stores the management and control strategy to the UDR or updates the management and control strategy stored in the UDR via an intermediate processing of the NEF.

In detail, as shown in FIG. 8, the NEF carries out the communication connection between the UDR and the UTM/USS. The Nnef_UAV Management-Create/Update/Delete Request shown in FIG. 8 is one type of the first request described above.

After the NEF receives a Nnef_UAV Management-Create/Update/Delete Request, a NEF handling is executed. The NFE handling may include, but is not limited to, determining whether the UTM/USS is a legal entity that can access the cellular mobile communication network.

After the NEF handling is completed and the UTM/USS is determined to be legal, a Nudr_DM_Create/Update/Delete Request is sent to the UDR, and the Nudr_DM_Create/Update/Delete Request is one type of the second request described above.

After the Nudr_DM_Create/Update/Delete Request is received, the UDR will process the management and control strategy for the UAV.

The processing of the management and control strategy may include creating a management and control strategy, deleting a management and control strategy, and/or updating a management and control strategy, and obtaining a processing result.

After the processing is completed, a request response corresponding to the Nudr_DM_Create/Update/Delete Request is returned to the NEF, and the request response here is the request response corresponding to the second request. This request response may be Nudr_DM_Create/Update/Delete response shown in FIG. 6.

After the Nudr_DM_Create/Update/Delete response is received, the NEF sends the Nnef_UAV Management-Create/Update/Delete Response to the SMF. The Nnef_UAV Management-Create/Update/Delete Response is the request response corresponding to the first request.

In an embodiment, processing the management and control strategy based on the second request includes at least one of:
in response to the second request being a creation request, creating the management and control strategy for the UAV;
in response to the second request being an update request, updating the management and control strategy for the UAV; or
in response to the second request being a delete request, deleting the management and control strategy for the UAV. The management and control strategy after the processing includes at least one of:
a newly created management and control strategy; or
an updated management and control strategy.

In another embodiment, if a management and control strategy is deleted or nulled, the UDR may send a deletion instruction or a null instruction to the SMF of the UAV via the NEF, or delete or null the deleted or nulled management and control strategy.

In an embodiment, the UAV management and control strategy processing method of the embodiment includes:
transmitting the management and control strategy after the processing to the SMF of the UAV based on the processing result.

If the management and control strategy is updated or created, the UDR can also push the management and control strategy to the SMF by itself, so that the SMF can receive the latest effective management and control strategy in time without requesting, and the switching of the control device for the UAV can be switched in time. As shown in FIG. 10, when the NEF discovers that the management and control strategy stored in the UDR changes, the processed management and control strategy can be carried on the NNEF Management-Notify shown in FIG. 10.

In an embodiment, the acquisition request includes:
a query message sent by the SMF based on a notification message transmitted by the NEF, in which the notification message is a message transmitted by the NEF based on the first request.

When the first request to update, delete or create a management and control strategy is received, the NEF informs the SMF of the UAV of the first request, and at this time, the SMF knows that the UDR stores the latest effective management and control strategy of the UAV, and automatically sends the acquisition request to the NEF, to obtain the latest effective management and control strategy.

A UAV control method is provided in the embodiment, the method includes:
in order to realize a C2 communication, the UAV and the UAVC establish PDU sessions for a C2 communication connection DNN with the network respectively.

The UAV and the UAVC need to be authenticated and authorized by the UTM/USS to successfully establish a PDU session for the C2 communication connection.

To reduce a delay of the C2 communication connection, the application data traffic of the C2 communication connection is transmitted between the UAV and the UAVC via the UPF, using the C2 communication connection shown by the dashed lines in FIG. 2.

The strategy for handling illegal UAV behavior (e.g., flying into a no-fly zone) and how to transmit the strategies to a 3GPP network are described below.

When the 3GPP network or the UTM/USS detects that the UAV flies into the no-fly zone, the management and control strategy as follows may be performed:
stopping the current PDU session for the C2 communication; and
assigning a new UAVC to take over the C2 control, in which the management and control strategy comprises the address information of the new UAVC; or, causing the UTM to control the UAV directly, in which the strategy comprises the address information of the UTM.

The management and control strategy is for a specific UAV, a group of UAVs or all UAVs.

If the management and control strategy is for a group of UAVs (e.g., all UAVs under a specific DNN) or all UAVs, the management and control strategy can be pre-configured manually in the SMF or configured by the UTM/USS via the NEF. The latter approach is suitable for cases where the parameters in the management and control strategy change frequently, e.g., the list of UAVCs specified by the UTM to take over the C2 control.

As shown in FIG. 8, the UTM/USS provides the management and control strategy for the UAV to the NEF, and the strategy includes the UAV no-fly zone, and the policy and/or application scope (UAVs under a particular slice or the DNN or all UAVs) once the UAV has flown into the no-fly zone.

The NEF determines whether the UTM/USS is a legal device with the authorization for the C2 communication.

The NEF provides the management and control strategy for the UAV to the UDR.

The UDR updates the management and control strategy for the UAV.

The UDR responds to the NEF.

The NEF responds to the UTM/USS.

When the SMF receives a PDU session establishment request from the UAV to establish the C2 communication connection, the SMF obtains the management and control strategy for the UAV from the UDR, which can be seen in FIG. 9.

If the management and control strategy for the UAV is pre-configured in the SMF, the process of storing the management and control strategy in the UDR or the authentication and authorization process is dynamically provided by the UTM/USS, and the SMF needs to monitor the UAV for misbehaviors such as flying into the no-fly zone by calling relevant technical solutions.

When the management and control strategy for the UAV flying into the no-fly zone is assigning another UAVC or the UTM to take over the C2 communication, the SMF needs to provide the UPF with the address information of the new UAVC or UTM, in order for the UPF to route the C2 communication to the correct address. Afterwards, the SMF terminates the PDU session of the old UAVC. The address of the new UAVC or UTM can be pre-configured in the SMF (if it does not change), stored in the UDR (shown in FIG. 2.2-2) or provided by the UTM/USS (the address included in a UTM strategy request during the authentication and authorization process or when the UTM detects that the UAV is flying into the no-fly zone).

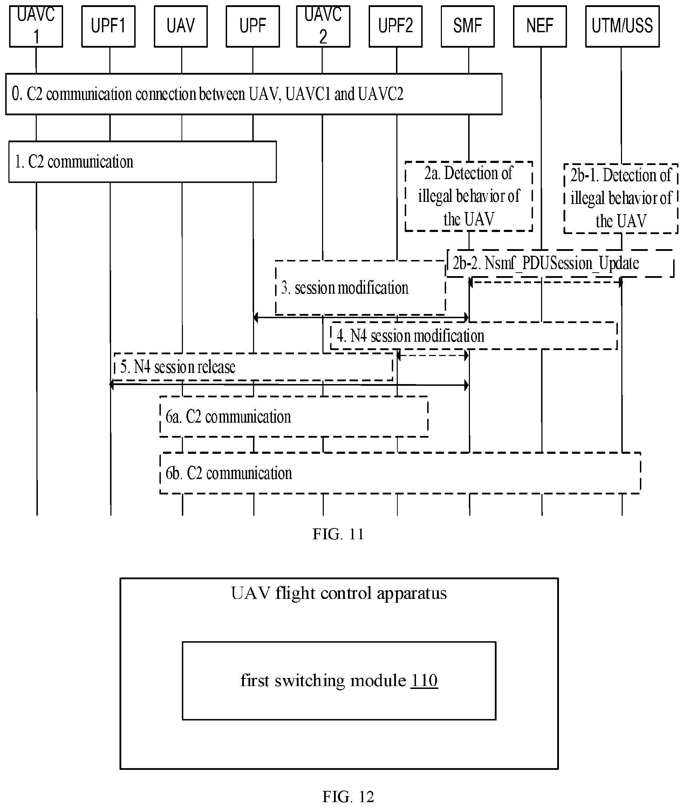

As shown in FIG. 11, a UAV management and control strategy processing method according to an embodiment is provided. The method includes the following steps.
0. The UAV, UAVC1 and UAVC2 each establish a PDU session for the C2 communication respectively, and register their IP address and the address of the SMF on the UTM/USS during the session establishment process. The SMF may be preconfigured with the management and control strategy for the UAV or the SMF may obtain the management and control strategy for the UAV from the UDR. The UAVC1 can be the first device as described above.
1. The C2 communication is conducted.
2a. The SMF detects a misbehavior of the UAV (e.g., flying into a no-fly zone).
2b-1. The UTM/USS detects a misbehavior of the UAV (e.g., flying into a no-fly zone or not following a preset route) and notifies the SMF, and the message may include the management and control strategy for the UAV.
2b-2. The UTM/USS sends an Nsmf_PDUSession-Update to the SMF, which is a request to switch the control device for the UAV. The Nsmf_PDUSession-Update may carry the updated address information of the second device.
   It is noted that the solution of step 2a and the solution of a combination of steps 2b-1 and 2b-2 are parallel, and it is sufficient to execute one of the solutions at the time of implementation.
3. The SMF configures the UPF to route the C2 communication to the UAVC2 or UTM according to the management and control strategy. The UAVC2 or UTM is the second device described above. For example, the SMF switches the control device for the UAV by means of a session modification message.
4. If the management and control strategy is to establish the C2 connection between the UAV and the UAVC2, the SMF configures a UPF2 to route the C2 connection to the UAV. The SMF establishes the communication connection between the UAV and the second device via the session modification.
5. The SMF releases the C2 communication PDU session between the UAV and the UAVC1. The SMF releases the communication connection between the UAV and the UAVC1 by a session release message.
6. The C2 communication between the UAV and the UAVC2 or between the UAV and the UTM is established. If the UAV and UAVC2 are connected to different UPFs, like UPF1 and UPF2 shown in FIG. 11, the C2 communication needs to use both UPFs, as can be seen in steps 6a and 6b of FIG. 11.

FIG. 12 is a schematic diagram of a UAV flight control apparatus according to an exemplary embodiment. The apparatus is applied in a SMF, and the apparatus includes: a first switching module 110.

The first switching module 110 is configured to, in response to detecting a requirement for switching a control device for the UAV, switch the control device for the UAV from a first device to a second device based on a management and control strategy.

When a message for adding, deleting or modifying the management and control strategy for the UAV is received, the NEF notifies the corresponding SMF.

If the strategy is specific to a particular UAV, the UTM/USS provides the strategy and the information on the no-fly zone that needs to be monitored to the SMF during the authentication and authorization process, and then the SMF needs to detect whether the UAV flies into the no-fly zone. Alternatively, the UTM/USS sends a strategy request to SMF when the UTM/USS detects that the UAV flies into the no-fly zone.

In an embodiment, the first switching module 110 may be a program module. When the program module is executed by a processor, it switches the control device for the UAV from the first device to the second device based on the management and control strategy in response to detecting the requirement for switching the control device for the UAV.

In another embodiment, the first switching module 110 may be a combination module of hardware and software. The module includes, but is not limited to, a variety of programmable arrays. The programmable array includes but is not limited to: a field programmable array or a complex programmable array.

In a further embodiment, the first switching module 110 may also include a pure hardware module, which includes but is not limited to, an application specific integrated circuit.

In an embodiment, the apparatus further includes a detection module. The detection module can detect the requirement for switching the control device for the UAV. Detecting the requirement for switching the control device for the UAV includes at least one of:
detecting a misbehavior of the UAV; or
detecting the first device satisfying a control device switching condition when the UAV performs a legal behavior.

In an embodiment, the misbehavior of the UAV includes:
the UAV flying into a no-fly zone; or
the UAV deviating from a preset route.

In an embodiment, the first switching module 110 is configured to: release a communication connection between the UAV and the first device, and establish a communication connection between the UAV and the second device.

In an embodiment, the first switching module 110 is configured to: transmit address information of the second device to a UPF, in which the communication connection between the UAV and the second device is established by the UPF based on the address information.

In an embodiment, the second device includes at least one of:
a UAVC; or
a UTM.

In an embodiment, the management and control strategy includes at least one of:
a management and control strategy for a single UAV;
a management and control strategy for a group of UAVs, in which the group of UAVs includes one or more UAVs; or
a management and control strategy for any UAV.

In an embodiment, the apparatus further includes: a management and control strategy module, configured to implement at least one of the following steps:
pre-configuring the management and control strategy;
obtaining the management and control strategy from a Unified Data Repository UDR; or
obtaining the management and control strategy from the UTM of the UAV.

In an embodiment, the management and control strategy module is configured to implement at least one of the following steps:
transmitting a request for the management and control strategy to a NEF; and
receiving a response from the NEF, in which the response includes the management and control strategy from the UDR.

The management and control strategy module is configured to: obtain the management and control strategy from the UTM during an authentication and authorization process of establishing the communication connection between the UAV and the first device; and/or obtain the management and control strategy from the UTM in response to detecting the requirement for switching the control device from the UAV.

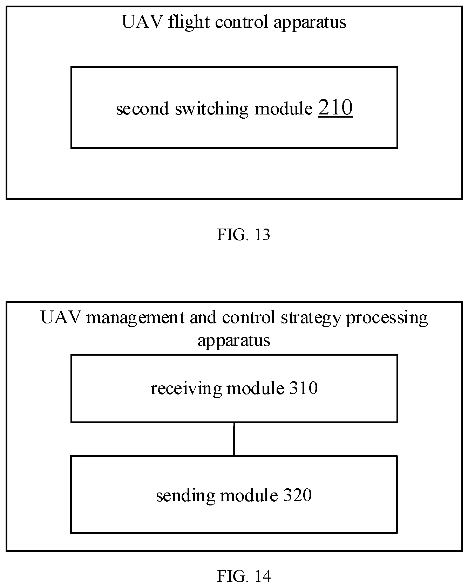

FIG. 13 is a schematic diagram of a UAV flight control apparatus according to an exemplary embodiment. The apparatus is applied in a UTM or USS, and the apparatus includes: a second switching module 210.

The second switching module 210 is configured to, in response to detecting a requirement for switching a control device for the UAV, switch the control device for the UAV from a first device to a second device based on a management and control strategy, and request a SMF to switch the control device for the UAV from the first device to the second device based on the management and control strategy.

In an embodiment, the second switching module 210 may be a program module. When the program module is executed by a processor, it switches the control device for the UAV from the first device to the second device based on the management and control strategy in response to detecting the requirement for switching the control device for the UAV.

In another embodiment, the second switching module 210 may be a combination module of hardware and software. The module includes, but is not limited to, a variety of programmable arrays. The programmable array includes but is not limited to: a field programmable array or a complex programmable array.

In a further embodiment, the second switching module 210 may also include a pure hardware module, which includes but is not limited to, an application specific integrated circuit.

In an embodiment, detecting the requirement for switching the control device for the UAV includes at least one of: detecting a misbehavior of the UAV; or detecting the first device satisfying a control device switching condition when the UAV performs a legal behavior.

For example, the USS/UTM includes a detection module, configured to detect the above requirement for switching the control device for the UAV.

In an embodiment, the second switching module 210 is configured to: request to release a communication connection between the UAV and the first device, and/or request to establish a communication connection between the UAV and the second device.

In an embodiment, the second switching module 210 is configured to: transmit address information of the second device to the SMF, in which the address information is used for being transmitted, by the SMF to a UPF, and the address information is used for establishing, by the UPF a session routing for a communication between the UAV and the second device.

In an embodiment, the second device includes at least one of:
a UAVC; or
a UTM.

In an embodiment, the management and control strategy includes at least one of:
a management and control strategy for a single UAV;
a management and control strategy for a group of UAVs, in which the group of UAVs includes one or more UAVs; or
a management and control strategy for any UAV.

In an embodiment, the apparatus further includes:
a management and control strategy sending module, configured to transmit the management and control strategy to the SMF.

In an embodiment, the management and control strategy sending module is further configured to: transmit the management and control strategy to the SMF during an authentication and authorization process of establishing the communication connection between the UAV and the first device; and/or transmit the management and control strategy to the SMF in response to detecting the requirement for switching the control device for the UAV.

FIG. 14 is a schematic diagram of a UAV management and control strategy processing apparatus according to an exemplary embodiment. The apparatus is applied in a UDR, and the apparatus includes: a receiving module 310 and a sending module 320.

The receiving module 310 is configured to receive a query request from a NEF, in which the query request is transmitted based on an acquisition request from a SMF.

The sending module 320 is configured to send a request response corresponding to the query request to the NEF, in which an acquisition response is used for being transmitted to the SMF by the NEF based on the request response corresponding to the query request, each of the request response and the acquisition response carries the management and control strategy, and the management and control strategy is used for performing switching of a control device for the UAV in response to detecting a requirement for switching the control device for the UAV.

In an embodiment, the receiving module 310 and the sending module 320 may be a program module. When the program module is executed by a processor, it transmits the management and control strategy to the SMF.

In another embodiment, the receiving module 310 and the sending module 320 may be a combination module of hardware and software. The module includes, but is not limited to, a variety of programmable arrays. The programmable array includes but is not limited to: a field programmable array or a complex programmable array.

In a further embodiment, the receiving module 310 and the sending module 320 may also include a pure hardware module, which includes but is not limited to, an application specific integrated circuit.

In an embodiment, the receiving module 310 is further configured to: receive a second request from the NEF based on a first request from a UTM/USS of the UAV.

The apparatus further includes:
a processing module, configured to process the management and control strategy based on the second request.

The sending module 320 is further configured to transmit a request response corresponding to the second request to the NEF, in which a request response corresponding to the first request is used for being transmitted to the UTM/USS by the NEF based on the request response corresponding to the second request, and each of the request response corresponding to the first request and the request response corresponding to the second request carries a processing result of the management and control strategy.

In an embodiment, the processing module is further configured to perform at least one of:
in response to the second request being a creation request, creating the management and control strategy for the UAV;
in response to the second request being an update request, updating the management and control strategy for the UAV; or
in response to the second request being a delete request, deleting the management and control strategy for the UAV.

In an embodiment, the sending module is further configured to: transmit the management and control strategy after the processing to the SMF of the UAV based on the processing result.

In an embodiment, the acquisition request includes:
a query message sent by the SMF based on a notification message transmitted by the NEF, in which the notification message is a message transmitted by the NEF based on the first request.

The embodiment of the disclosure provides a communication device including a processor, a transceiver, a memory, and programs stored on the memory and executable by the processor. When the programs are executed by the processor, the method of any of the preceding technical solutions that can be applied to the SMF, UTM/USS, or UDR is implemented, as shown in any one of the figures shown in FIG. 4 to FIG. 11.

The communication device can be the aforementioned SMF, UTM/USS, or UDR.

The processor may include various types of storage mediums. The storage medium is a non-transitory computer storage medium capable of continuing to store information on the communication device after a power failure. The communication device includes a base station or a UE.

The processor can be connected to the memory through a bus, so that the processor can read the executable programs stored on the memory, for example, the method shown in any one of FIG. 4 to FIG. 11.

The embodiment of the disclosure provides a computer storage medium storing executable programs. After the executable programs are executed by a processor, the method shown in the technical solution of the first aspect or the method shown in the technical solution of the second aspect can be implemented, for example, at least one of the method shown in FIG. 2 to FIG. 4, or the method shown in FIG. 6 to FIG. 7.

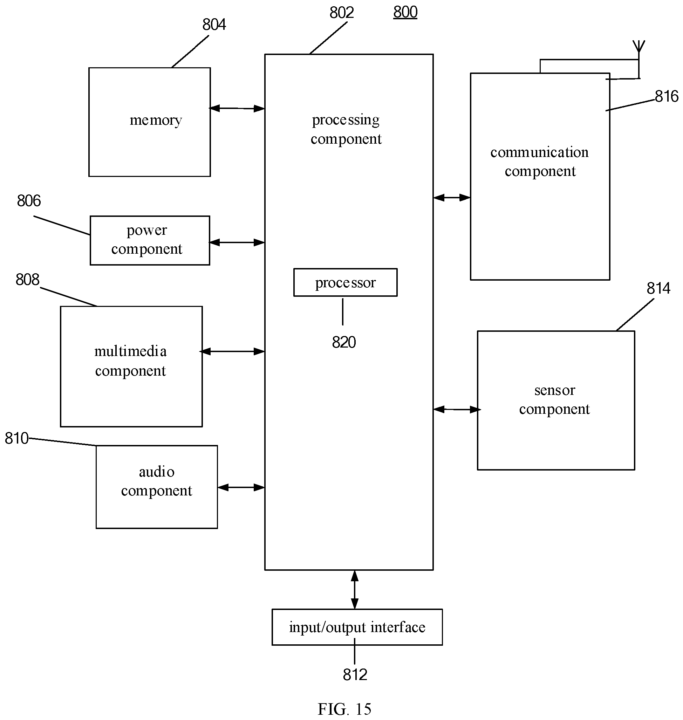

FIG. 15 is a block diagram of a UE 800 according to an exemplary embodiment. For example, the UE 800 may be a mobile phone, a computer, a digital broadcasting terminal, a message transceiver device, a game console, a tablet device, a medical device, a fitness device and a personal digital assistant.

As illustrated in FIG. 15, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processor 820 to perform all or part of the steps in the above described method. Moreover, the processing component 802 may include one or more module which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the UE 800. The power component 806 may include a power management system, one or more power source, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensor to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In exemplary embodiments, the UE 800 may be implemented with one or more Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described method.

In exemplary embodiments, there is also provided a non-transitory computer readable storage medium including executable instructions, such as the memory 804, executable by the processor 820 in the UE 800, for performing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An Unmanned Aerial Vehicle UAV flight control method, applied in a Session Management Function SMF, comprising:
in response to detecting a requirement for switching a control device for the UAV, switching the control device for the UAV from a first device to a second device based on a management and control strategy.

2. The method of claim 1, wherein detecting the requirement for switching the control device for the UAV comprises at least one of:
detecting a misbehavior of the UAV; or
detecting the first device satisfying a control device switching condition when the UAV performs a legal behavior.

3. The method of claim 2, wherein the misbehavior of the UAV comprises:
the UAV flying into a no-fly zone; or
the UAV deviating from a preset route.

4. The method of any one of claims 1 to 3, wherein in response to detecting the requirement for switching the control device for the UAV, switching the control device for the UAV from the first device to the second device based on the management and control strategy, comprises:
releasing a communication connection between the UAV and the first device; and
establishing a communication connection between the UAV and the second device.

5. The method of claim 4, wherein establishing the communication connection between the UAV and the second device, comprises:
transmitting address information of the second device to a User Plane Function UPF, wherein the communication connection between the UAV and the second device is established by the UPF based on the address information.

6. The method of any one of claims 1 to 5, wherein the second device comprises at least one of:
a UAV Controller UAVC; or
an Unmanned Aerial System UAS Traffic Management UTM.

7. The method of any one of claims 1 to 7, wherein the management and control strategy comprises at least one of:
a management and control strategy for a single UAV;
a management and control strategy for a group of UAVs, wherein the group of UAVs comprises one or more UAVs; or
a management and control strategy for any UAV.

8. The method of any one of claims 1-7, further comprising:
pre-configuring the management and control strategy;
obtaining the management and control strategy from a Unified Data Repository UDR; or
obtaining the management and control strategy from the UTM of the UAV.

9. The method of claim 8, wherein obtaining the management and control strategy from the UDR, comprises:
transmitting a request for the management and control strategy to a Network Exposure Function NEF; and
receiving a response from the NEF, wherein the response comprises the management and control strategy from the UDR.

10. The method of claim 8, wherein obtaining the management and control strategy from the UTM of the UAV, comprising at least one of:
obtaining the management and control strategy from the UTM during an authentication and authorization process of establishing the communication connection between the UAV and the first device; or
obtaining the management and control strategy from the UTM in response to detecting the requirement for switching the control device from the UAV.

11. A UAV flight control method, applied in a UTM or UAS Service Supplier USS, comprising:
in response to detecting a requirement for switching a control device for the UAV, switching the control device for the UAV from a first device to a second device based on a management and control strategy, and requesting a SMF to switch the control device for the UAV from the first device to the second device based on the management and control strategy.

12. The method of claim 11, wherein detecting the requirement for switching the control device for the UAV comprises at least one of:
detecting a misbehavior of the UAV; or
detecting the first device satisfying a control device switching condition when the UAV performs a legal behavior.

13. The method of claim 12, wherein requesting the SMF to switch the control device for the UAV from the first device to the second device, comprises:
requesting to release a communication connection between the UAV and the first device; and
requesting to establish a communication connection between the UAV and the second device.

14. The method of claim 13, wherein establishing the communication connection between the UAV and the second device, comprises:
transmitting address information of the second device to the SMF, wherein the address information is used for being transmitted, by the SMF to a UPF, and the address information is used for establishing, by the UPF a session routing for a communication between the UAV and the second device.

15. The method of claim 11 or 12, wherein the second device comprises at least one of:
a UAVC; or
a UTM.

16. The method of claim 11 or 12, wherein the management and control strategy comprises:
a management and control strategy for a single UAV;
a management and control strategy for a group of UAVs, wherein the group of UAVs comprises one or more UAVs; or
a management and control strategy for any UAV.

17. The method of any one of claims 11-16, further comprising:
transmitting the management and control strategy to the SMF.

18. The method of claim 17, wherein transmitting the management and control strategy to the SMF, comprises at least one of:
transmitting the management and control strategy to the SMF during an authentication and authorization process of establishing the communication connection between the UAV and the first device; or
transmitting the management and control strategy to the SMF in response to detecting the requirement for switching the control device for the UAV.

19. A UAV management and control strategy processing method, applied in a UDR, comprising:
receiving a query request from a NEF, wherein the query request is transmitted based on an acquisition request from a SMF; and
sending a request response corresponding to the query request to the NEF, wherein an acquisition response is used for being transmitted to the SMF by the NEF based on the request response corresponding to the query request, each of the request response and the acquisition response carries the management and control strategy, and the management and control strategy is used for performing switching of a control device for the UAV in response to detecting a requirement for switching the control device for the UAV.

20. The method of claim 19, further comprising:
receiving a second request from the NEF based on a first request from a UTM/USS of the UAV;
processing the management and control strategy based on the second request; and
transmitting a request response corresponding to the second request to the NEF; wherein
a request response corresponding to the first request is used for being transmitted to the UTM/USS by the NEF based on the request response corresponding to the second request, and each of the request response corresponding to the first request and the request response corresponding to the second request carries a processing result of the management and control strategy.

21. The method of claim 20, wherein processing the management and control strategy based on the second request comprises at least one of:
in response to the second request being a creation request, creating the management and control strategy for the UAV;
in response to the second request being an update request, updating the management and control strategy for the UAV; or
in response to the second request being a delete request, deleting the management and control strategy for the UAV.

22. The method of claim 20, further comprising:
transmitting the management and control strategy after the processing to the SMF of the UAV based on the processing result.

23. The method of claim 20, wherein the acquisition request comprises:
a query message sent by the SMF based on a notification message transmitted by the NEF, wherein the notification message is a message transmitted by the NEF based on the first request.

24. A UAV flight control apparatus, applied in a SMF, comprising:
a first switching module, configured to, in response to detecting a requirement for switching a control device for the UAV, switch the control device for the UAV from a first device to a second device based on a management and control strategy.

25. A UAV flight control apparatus, applied in a UTM/USS, comprising:
a second switching module, configured to, in response to detecting a requirement for switching a control device for the UAV, switch the control device for the UAV from a first device to a second device based on a management and control strategy, and request a SMF to switch the control device for the UAV from the first device to the second device based on the management and control strategy.

26. A UAV management and control strategy processing apparatus, applied in a UDR, comprising:
a receiving module, configured to receive a query request from a NEF, wherein the query request is transmitted based on an acquisition request from a SMF; and
a sending module, configured to send a request response corresponding to the query request to the NEF, wherein an acquisition response is used for being transmitted to the SMF by the NEF based on the request response corresponding to the query request, each of the request response and the acquisition response carries the management and control strategy, and the management and control strategy is used for performing switching of a control device for the UAV in response to detecting a requirement for switching the control device for the UAV.

27. A communication device comprising a processor, a transceiver, a memory and programs stored on the memory and executable by the processor, wherein when the programs are executed by the processor, the method of any one of claims 1-10, the method of any one of claims 11-18 or the method of any one of claims 19-23 is implemented.

28. A computer storage medium storing executable programs, wherein when the executable programs are executed by a processor, the method of any one of claims 1-10, the method of any one of claims 11-18 or the method of any one of claims 19-23 is implemented.
